# EUROPEAN PATENT APPLICATION

(11) **EP 4 807 854 A1**
(43) Date of publication of application: **16.09.2026**
(21) Application number: 25163269.1
(22) Date of filing: 12.03.2025
(51) Int. Cl.: H01M 10/48, H01M 10/655, H01M 10/6571

(54) **SELF-REGULATED THERMAL MANAGEMENT SYSTEM FOR ELECTRICAL DEVICES**

(71) Applicant: University of Twente, 7500 AE Enschede (NL)
(72) Inventor: FARIA ALBANESE, Jimmy Alexander, 7514JD Enschede (NL); MUÑOZ ROJO, Miguel, Madrid (ES); XING, Xinming, 7522 LW Enschede (NL); ELNAHAS, Rem, 7500 AE Enschede (NL); TRANGWACHIRACHAI, Korawich, 7500 AE Enschede (NL); WITS, Wessel, 8019ZJ Zwolle (NL); OOSTERHUIS, Joris, 7500 AE Enschede (NL); DE BOER, Geert, 7500 AE Enschede (NL)
(74) Representative: Elzaburu S.L.P.

(57) **Abstract**

A thermal management system for regulating the temperature of an electrical device, wherein the system includes at least one thermal router comprising at least one stack of pyrolytic graphitic sheets bound together, the system being configured to determine the temperature of the electrical device by measuring the change in the electrical conductivity of across the stack of pyrolytic graphitic sheets is hereby disclosed.

A method for the thermal management of an electrical device whereby the temperature of the electrical device is determined by measuring the change in the electrical conductivity of across the stack of pyrolytic graphitic sheets is also disclosed.

## Description

### Field of the invention

The present invention relates to a thermal management system for regulating the temperature of an electrical device, as well as to a method for the thermal management of an electrical device.

### Background

Sustainable and cost-efficient energy production and storage from renewable sources are within the greatest challenges of our society. In this scenario, batteries will be essential for facilitating the transition from fossil- to renewables- based transportation and power generation, where high energy density, high power and safety are mandatory. The main challenge, however, is that increasing the energy density and charge-discharge rates in battery packs leads to greater heat fluxes that create hot-spots, which can irreversibly degrade the battery cell and cause thermal runaways. For instance, a commercial 20 Ah Li-ion battery with a surface area of ~0.04 m² can generate ~90 W of heat at 4C discharge rate, rising its surface temperature to ~60 °C. A battery stack composed of two such batteries can generate ~180 W of waste heat (Q_{wh}) that in the absence of any battery Thermal Management System (TMS) can lead to c.a. 20 % capacity loss in just 600 cycles. Notably, maintaining the battery stack at ~25°C can reduce the capacity losses to only ~4% after 600 cycles. Other electronic devices also suffer from similar heating problems, causing the progressive degradation of the device.

Thermal management of electro-thermal systems like batteries or electronic devices has so far been predominantly mechanical, i.e. active cooling with water and fans, or passively, i.e. heat sinks. Mechanical cooling systems require moving parts with large footprints, limited reliability, substantial weight, and complex architecture. Hence, they often have only one thermal capability (i.e. just cooling) and can create electrical shortcuts in case of leakage of heat transport liquid (e.g. water), which greatly increases installation and maintenance costs.

In contrast, solid-state approaches using physically connected heat sinks or coupled rods and fins are vibration-less and reliable thermal management systems. However, implementation of these strategies in a compact, lightweight, and efficient manner is not trivial as large surface areas are required to achieve the desired heat fluxes. In this context, routing and repurposing waste heat from the battery stack can potentially increase the overall efficiency of the storage system. In this strategy, out-of-plane heat transport in thermal conduits should be minimized to reduce heat losses to the surroundings.

In addition to heat management, one of the key requirements for an efficient battery TMS is the capacity to develop active and real-time control that guarantees reliable, safe and long-lasting operation of battery or electronic devices. The system should be able to provide heating during the periods when the stack temperature drops and cooling when the temperature raises. And ideally, this process should take place as automatically as possible, and optimally in a self-regulated way.

In the past, thermal routers made of carbon-based materials such as graphite and graphene have been described for driving out the waste heat from battery stacks. For instance, US20110198067A1 discloses a thermal-interfacing material based on graphite layers coupled together using a bonding agent to sustain the stacking arrangement. The resulting material is machined to create a thermal interface between a conventional sink with the heat source with the layers aligned perpendicular to the plane of the surface of the heat generating component. Similarly, US2022/0072825 A1 describes a heat sink design and method for manufacturing graphene- and graphite- based heat sink in which needle-like nanoparticles based on metal oxides are employed to increase the adhesive interaction between the carbon layers. The heat sink comprising of the stacked carbon sheets are positioned perpendicular to the surface of the electronic component where heat is released. In US11325349 a stack composed of graphite layers bonded together with an adhesive polymer is employed to remove heat from a micro-electronic device towards the heat sink. In US7402340B2 a similar concept is described in which the carbon-based sheets of high thermal conductivity are stacked using polymeric adhesive in combination with high-thermal conductivity carbon particles to increase the heat transfer perpendicular to the planar direction. The stacked graphite layers are positioned on top of the heat source parallel to the hot surface. To further improve the heat distribution across the different layers of the graphite material the US 20180063996 A1 discloses a transversal heat transfer material based on a combination of thermal sheets of pyrolytic graphite of different thickness and thus thermal conductivity with high-thermally conductive materials that help to transfer the heat in an out-plane direction and away from the heat so. This transversal heat approach provides additional out-of-plane heat transport path in different layers heretofore unavailable with systems that rely solely on the in-plane thermal heat path. In WO2016/118307A1 a methodology and design of heat dissipation material based on graphitic sheets for its application in wearable virtual reality glasses in which the layers of the graphite are stacked using an adhesive polymer binder is employed to sustain the mechanical structure of the material. Ultimately, these systems cannot control the temperature of the micro-electronic or battery device by themselves, which limits their application for the self-regulation of their temperature.

With regard to Thermal Management Systems, in the prior art we can find documents like US2021305639AA, which describes a cooling system for a battery module or pack comprising a graphitic heat spreader element in thermal communication with the battery cells and a cooling mechanism configured to transport the heat generated from the battery cells across the graphitic heat spreader element in order to cool the cells. In this system, therefore, heat can only be removed and not conveyed to the battery module.

Also, documents US2017200992AA, US2013059190AA, US2015372356AA or US2015357692AA describe systems based on thermocouples for the control of the temperature in a battery stack or electronic device. These systems attach a thermocouple to the electrical leads of two batteries coupled in series in a stack. These solutions are, however, limited by the use of thermocouples to measure the temperature of the system to apply heating and cooling, which is rather complex as misplacing the thermocouple can lead to overheating. In addition, the thermocouple is located on the electrical leads between the different cells inside the battery stack, which can lead to thermalization of the system due to the proximity between the thermo-electric and the heat source. Finally, the use of the thermocouples on the electrodes only does not cover the hotspots that can be formed in the body of the battery. This can be rather unsafe as hot spots caused by defects in the cell or simply fast charging or discharging can lead to irreversible failure of the cell and potentially explosion in the case of a runaway reaction. Finally, in all these systems an external source of electric power is required to heat the spreader and/or the thermoelectric device in order to provide controlled heating and/or cooling of the battery or electronic device. Consequently, the system is neither stand-alone nor self-regulated.

As it has been shown, existing technologies have several problems with, including:
- In batteries and many micro-electronic devices, it is essential to dynamically provide cooling and heating to ensure that the system operates at its optimum temperature. Thus, current passive heat management systems are insufficient to achieve this essential objective.
- In existing systems for thermo-electric temperature regulation, the heat is removed only from the electrical leads between the battery stacks, even though the heat evolves from the entire body of the battery. This leads to uncontrolled development of hotspots on the body of the battery.
- Current thermo-electro heat control systems cannot be located near the heat-source, which can lead to thermalization of the system. That is that the temperature of the thermo-electric device and the electrical lead approach a very similar value, which drastically decreases the cooling power of the thermo-electric device. Similarly, the power generation diminishes substantially as the temperature gradient between the hot- and cold sides of the thermo-electric device.
- Conventional thermo-electric systems for temperature regulation rely on external measurements of the temperature on the system using thermo-couples, which leads to complex integration between the thermo-electric device and the power control system. If the thermocouple is accidentally displaced from the location where the temperature should be controlled, then the system could overheat as the temperature reading would be compromised.

Therefore, there is still a need of improved thermal management systems for batteries and other electronic devices that overcome the problems existing in the prior art.

### Summary

Therefore, a problem solved by the present invention is to provide a thermal management system for electrical devices such as batteries or electronic components that is able to dynamically provide cooling and heating to ensure that the system operates at its optimum temperature.

The solution provided in the present invention is based on the fact that the inventors have identified that by providing a thermal router comprising a stack of graphitic sheets bound together and measuring the electrical resistance across the stack while it is attached to an electrical component, the temperature of the component or relevant part thereof can be determined. This avoids the need for other less reliable sensing devices such as thermocouples and allows to carry out both the measurement and the cooling or heating of the electrical device across the stack of graphitic sheets, so that the temperature of the device can be dynamically controlled. In this way the system, controlled by an adequate control system and thermoelectric components that are external to the router and the electrical device, can be self-regulated and able to work in standalone mode.

The ability of the system of the invention to measure and control the temperature of the electrical device using the same component, i.e. the thermal router, allows a unique control of the temperature of the system, unprecedent in this technical field.

Accordingly, a first aspect of the invention relates to a thermal management system for regulating the temperature of electrical devices such as batteries or electronic devices wherein the system includes at least one thermal router (3) comprising at least one stack of pyrolytic graphitic sheets (3-iv) bound together, the stack being in thermal communication with the electrical device (1), wherein the system is configured to determine the temperature of the electrical device (1) by measuring the change in the electrical conductivity across the stack of pyrolytic graphitic sheets (3-iv) when the stack is in thermal communication with the electrical device (1), and wherein the system is configured to drive heat in or out of the electrical device (1) depending on the temperature of the electrical device (1) through the stack of pyrolytic graphitic sheets (3-iv).

A second aspect of the invention relates to a method for the thermal regulation of electrical devices such as batteries or electronic devices comprising the steps of:
a) placing a thermal router (3) comprising at least one stack of pyrolytic graphitic sheets (3-iv) bound together in thermal communication with the electrical device (1);
b) determining the temperature of the electrical device (1) by measuring the change in the electrical conductivity across the stack of pyrolytic graphitic sheets (3-iv) when the stack is in thermal communication with the electrical device (1), and
c) depending on the temperature of the electrical device (1), driving heat in or out of the electrical device (1) through the stack of pyrolytic graphitic sheets (3-iv).

Additional advantages of the invention, are:
- When the system works based on resistive heating it is possible to provide quickly heat to the system by means of Joule heating, preventing component failure thanks to the instantaneous nature of Joule effect.
- The thermoelectric component is located outside the electrical heat generating device, which prevents the thermalization of the inner components.
- Due to the fact that the measurement and the control of the temperature is carried out by the thermal router, the resulting system is more compact that other systems of the prior art.
- The invention provides an integrated system that can measure and transfer heat simultaneously, which is something unique in the market. The most used commercial products for thermal management of battery and microelectronic are simply passive heat transfer components.

### Drawings

Figure 1: Schematic of the TMS of the invention functioning in Thermal-Router-Thermo-Electric (TRTE) mode for the temperature measurement and control. The figure shows the TMS (a), the thermal router (b), and the detailed structure of the thermal router and the heat transfer flux (c).
Figure 2: Schematic of the TMS of the invention functioning in Thermal-Router-Thermo-Electric (TRTE) mode for the for flat heat dissipating devices. The figure shows the TMS (a), the thermal router (b), and the heat transfer flux (c).
Figure 3: Schematic of the TMS of the invention functioning in Thermal-Router-Resistive Heating-Heat dissipation mode. The figure shows the TMS (a), the thermal router (b), and the structure of the thermal router and heat transfer flux (c).
Figure 4: Configuration and dynamic response of the thermal router used in Experimental Test 1. Set-up employed for the assessment of the Joule heating and electrical resistance of the thermal routers (a), dynamic temperature response with applied power (b), temperature-power behaviour (c), electrical resistance as a function of the temperature (d) for the thermal routers consisting of one (i), five (ii), and twelve (iii) layers of pyrolytic graphitic sheets.
Figure 5: Configuration and thermal conductivity of the thermal router used in Experimental Test 2. Set-up employed for the assessment of the thermal conductivity (a), thermal conductivity as a function of the heat flow in the system (b) for the thermal routers consisting of one (i), two (ii), five (iii), and eleven (iv) layers of pyrolytic graphitic sheets.

### Definitions

As used herein, the terms "thermal router", "heat router", "heat spreader" or similar, refers to a thermally conductive device or material that allows heat or thermal energy to flow from one component to another component, or alternatively within different parts of the same component.

As used herein, the term "thermal communication" describes two or more components that are configured to allow heat or thermal energy transfer from one component to another component, or alternatively within different parts of the same component.

As used herein, the term "thermoelectric device or component" is a device that uses the temperature difference between two components to produce electrical power via thermoelectric materials. Alternatively, a thermoelectric system or device as described herein is a device which uses electrical power to move heat from one surface to another, thereby creating a temperature difference between the two surfaces via the thermoelectric materials.

As used herein, the term "thermal management system" or "TMS" is a system used to control temperatures and monitor conditions of electrical devices such as batteries to prevent the failure and/or degradation of the device. In the heating mode of the thermal management system, electric current flows through a heat spreader such that the heat spreader functions as a resistance heater. In a cooling mode of the thermal management system, the heat spreader can transfer heat away from the battery cells to a heat sink.

As used herein, the term "thermalization" (of the system) is related to the effect that occurs when the temperature of the thermo-electric device and that of the electrical device to be thermally controlled approach a very similar value, which drastically decreases the cooling power of the thermo-electric device.

As used herein, the term "hierarchically arranged pyrolytic graphitic sheets" means that the sheets can be indirectly coupled via an interfacing material but still be thermally connected allowing heat to be transferred to the device or component that needs to be thermally regulated.

### Detailed description

As explained above, the system of the invention includes a thermal router comprising a stack of graphitic sheets that can perform the temperature sensing and the heat management in an electrical device such as a battery or battery stack by means of the stack of graphitic sheets. The system of the invention determines the temperature of the electrical device on the basis of the change in the electrical conductivity of the stack of graphitic sheets and drives heat in or out of the electrical device through the stack of graphitic sheets using a control system that enables self-regulating thermal management of the electrical device. The system can operate in a variety of modes using thermal routers as heaters and coolers leveraging a thermo-electric device or as resistive heater via Joule heating. To the knowledge of the inventors, the use of thermal routers comprising graphitic sheets that are capable of both measuring and controlling the temperature of the device through the stack of graphitic sheets itself has not been disclosed previously in the prior art.

The thermal router used in the present invention comprises a stack of multiple layers of graphitic sheets, preferably pyrolytic graphitic sheets, bonded together using a polymeric adhesive of just a few microns thickness.

In embodiments, each graphitic sheet has typically a thickness of between 10 and 150 microns, more preferably between 50 and 150 microns, even more preferably between 75 and 120 microns, and most preferably around 100 microns. The stack of graphitic sheets typically comprises between 1 and 30 graphitic sheets, preferably between 5 and 20 graphitic sheets, more preferably between 10 and 20 graphitic sheets, and most preferably around 12 sheets. Typically, the adhesive layer adds 1 micron thickness between each two layers. In consequence, the stack of graphitic sheets has a total thickness of between 0.05 mm and 4.5 mm, preferably between 0.4 mm and 2.4 mm, more preferably between 0.8 mm and 2 mm, and most preferably around 1.5 mm.

Typically, the length of the pyrolytic graphitic sheets varies from 100 mm to 10.000 mm and the width ranges from 100 mm to 500 mm, in preferable embodiments the length is from 100 to 5.000 mm and the width is from 100 to 250 mm, and in the most preferable embodiment the length is from 500 to 2.500 mm and the width is from 200 to 250 mm, and are connected in their longitudinal and/or transversal edges by a metal connector that extends its length by coupling multiple thermal routers.

The graphitic sheets are stacked together using a polymer adhesive of 0.2 to 10 microns thickness that is capable of withstanding high temperatures and that, when cured, retains high flexibility; this allows to create a flexible thermal router, which is important at the time of accommodating the graphitic sheets to the shape of the device to be thermally controlled.

In embodiments, the thermal router additionally comprises a plurality of heat conductive pins made of a heat conductive material like carbon or a metal like Cu or Al that run perpendicular to the planar direction of the pyrolytic graphitic sheets and that go through the stack of sheets at least partially or even completely. The presence of these heat conductive pins maximizes the thermal conductivity of the thermal router.

In an embodiment, the surface of one or more of the graphitic sheets is treated by plasma oxidation to increase their adherence to the binding agent. According to experimental tests carried out by the inventors, a pretreatment in oxygen plasma for 10 to 30 seconds may increase the adherence of the sheets to the binding agent.

When using laser machining, a unibody thermal router that precisely links the heat source component (e.g. the body of the battery or the electronic device to be thermally controlled) to the heat dissipation or heat source system can be produced.

The TMS can include one or more thermal routers positioned between stacked battery cells or electronic devices. The one or more thermal routers may have a plurality of pyrolytic graphitic sheets that can function as a heater and/or cooler.

The TMS of the invention contains several possible configurations that self-regulate the temperature, including, but not limited to, the following working modes:

### 1) Individual Thermal-Router-Thermo-Electric (I-TRTE):

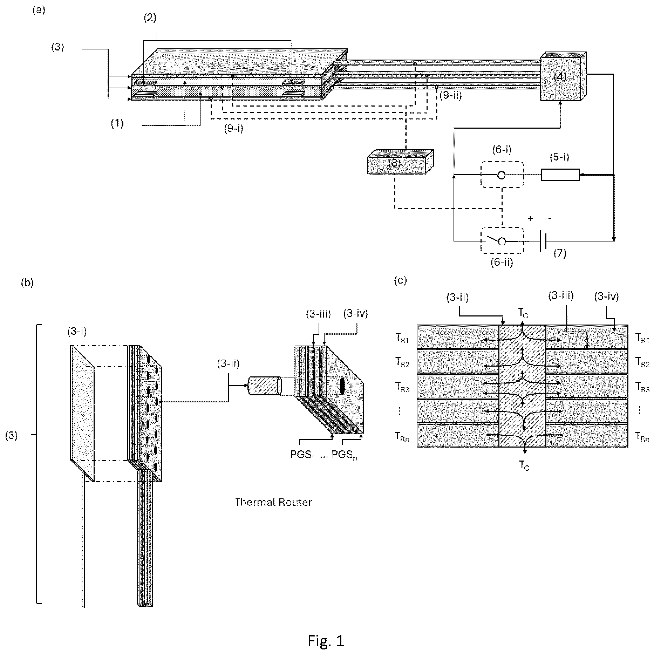

This configuration, shown in **Figure** 1, employs thermal routers including pyrolytic graphitic sheets with thermal conductivity from 700 to 1950 W/(m·K) to route the heat in and out of the electrical device (e.g. battery or micro-electronic component) using a thermoelectric device. In preferred embodiments, the router includes high-thermal conductive pins made of graphite or a metal like Cu or Al that go through the pyrolytic graphitic sheets, where the conductive pins have a thermal conductivity from 700 to 1950 W/(m·K) in order to maximize the thermal conductivity of the router, although the TMS of the invention can also work without these pins. The switch between heating and cooling modes can be carried out by controlling the direction of the current flowing through the thermo-electric device. The thermoelectric device is located outside of the electrical device, i.e. the battery or microelectronic environment, which prevents thermalization of the thermoelectric. To ensure that the heat is transferred from the heat source to the thermoelectric with minimum losses to the environment the thermal router is preferably coated with a flexible capping layer of thermal insulation. By measuring the electrical resistance across the stack of graphitic sheets the temperature of the device is determined. This allows the measurement and control of the temperature at the component level. This drastically decreases the complexity of the system as it does not require extra temperature-measuring devices like thermocouples to measure the temperature of the device. Furthermore, since the thermal router is fixed on the heat-generating electrical component (e.g. battery cell or micro-electronic) it ensures direct contact between the temperature measurement device and component. This allows robust operation of the self-regulating temperature control system.

As shown in **Figure 1****,** in this configuration the thermal routers **(3)** are placed in between the components that must be kept at a controlled temperature, where said component could be battery cells or micro-electronic devices **(1).** The thermal router **(3)** is based on a stack of hierarchically arranged pyrolytic graphitic sheets **(3-iv)** with high thermal conductivity that are bonded by a polymeric adhesive **(3-iii)** and thermally coupled conductive pins **(3-ii)** that are perpendicular to the longitudinal direction of the pyrolytic graphitic sheets **(****Figure 1 c****).** The pyrolytic graphitic sheets **(3-iv)** and the thermally conductive pins **(3-ii)** are preferably in direct contact, or at least in thermal communication, with the component that needs to be thermally regulated **(1).** This allows conductive heat transfer between the component **(1)** that is at a temperature ***T_{C}*** and the pyrolytic graphitic sheets **(3-iv)** that are at a temperature ***T_{R-n},*** where ***n*** is the number of the graphitic sheet. The direction and magnitude of the heat flux will depend on the temperature gradient between ***T_{C}*** and ***T_{R-n},*** the characteristics of the thermal router, and the potential heat losses to the environment. To minimize this heat losses a capping layer of thermal insulation **(3-i)** is preferably employed on the surfaces exposed to the environment. Thanks to the elastic nature of the thermal router **(3),** it is possible to create a flexible thermal router. In the case of batteries, the electrical leads of the battery cell **(2)** are connected to the external load. The exact nature of the load will depend strongly on the final application of the **I-TRTE.**

The switch between heating and cooling modes in the **I-TRTE** system can be carried out by controlling the current direction flowing through the thermo-electric device. Here, the thermo-electric **(4)** is located outside of the battery pack, substantially preventing thermalization of the thermo-electric **(4)** and the device **(1).** By measuring the electrical resistance across the stack of pyrolytic graphitic sheets, i.e. between points **(9-i)** and **(9-ii),** where point **(9-i)** is any point on the side of a stack of pyrolytic graphitic sheets **(3-iv),** and point **(9-ii)** is any point at the top, or the side, of a stack of pyrolytic graphitic sheets **(3-iv),** it is possible to estimate the temperature of the individual components. To measure the electrical conductivity or resistance correctly, a connection on the side and/or the top of the stack is required. Anything placed underneath the stack will create a gap that will hinder correct thermal communication between the device to be thermally regulated and the pyrolytic graphitic sheets.

This allows simultaneous measurement and control of the temperature at the component level using the electrical resistance measurement. To trigger the thermo-electric device an electrical signal is generated by a Proportional-Integral-Derivative (PID) controller **(8)** that activates a relay switch **(6i** and **6-ii)** that initiates the operation of the thermo-electric device **(4).** This relay switch is coupled to an external load **(5-i)** that is depicted as a resistance in **Figure 1a** and a power source **(7)** to allow also the generation of heat by the thermo-electric in cases where the temperature of the component **(1)** is below the desired set-point. In the case that heat is removed from the component **(1)** it is possible to couple the thermo-electric device as a thermo-electric generator. This allows for the generation of power that can be employed elsewhere in the system. The relay switch allows for fast control of the temperature regulation.

### 2) Thermal-Router-Thermo-Electric for flat devices (TRTE-FD):

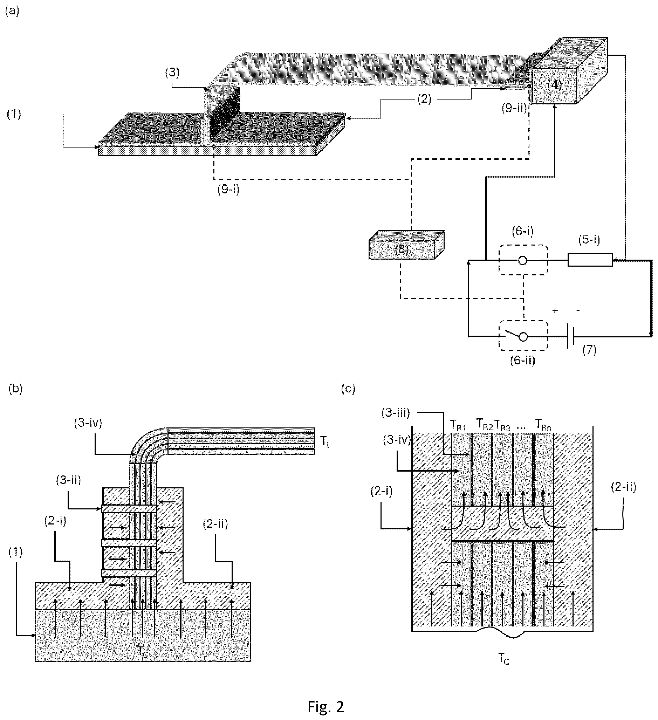

This configuration, shown in **Figure 2****,** is a variation of the I-TRTE in which the electrical device (e.g. battery or micro-electronic component) is a flat device with a single surface available for removing heat. This requires a different architecture of the Thermal-Router-Thermo-Electric device to allow heat routing in and out of the device. The same materials as those employed in the I-TRTE are employed in this configuration.

As shown in **Figure 2****,** in this configuration the thermal routers **(3)** are placed in between two adapting plates that mechanically fix the thermal routers to the electrical device (e.g. battery or micro-electronic component) while facilitating heat transfer in and out of the device. The component that must be kept at a controlled temperature can be battery cells or micro-electronic devices **(1).** The thermal router **(3)** is based on hierarchically arranged pyrolytic graphitic sheets **(3-iv)** with high thermal conductivity that are bonded by a polymeric adhesive **(3-iii)** and thermally coupled conductive pins **(3-ii)** that are perpendicular to the longitudinal direction of the pyrolytic graphitic sheets **(****Figure 2 b****).** The pyrolytic graphitic sheets **(3-iv)** and the thermally conductive pins **(3-ii)** are in thermal communication with the component that needs to be thermally regulated **(1).** This allows conductive heat transfer between the component **(1)** that is at a temperature ***T_{C}*** and the pyrolytic graphitic sheets **(3-iv)** that are at a temperature ***T_{R-n},*** where ***n*** is the number of the graphitic sheet. The direction and magnitude of the heat flux will depend on the temperature gradient between ***T_{C}*** and ***T_{R-n},*** the characteristics of the thermal router, and the potential heat losses to the environment. Thanks to the elastic nature of the thermal router **(3),** it is possible to create a flexible thermal router.

The switch between heating and cooling modes in the **TRTE-FD** system can be carried out by controlling the current direction flowing through the thermo-electric device. Here, the thermo-electric **(4)** is located outside of the battery cells or micro-electronic devices, substantially preventing thermalization of the thermo-electric **(4)** and the component **(1).** By measuring the electrical resistance between points **(9-i)** and **(9-ii)** where point **(9-i)** is any point at the side of a stack of pyrolytic graphitic sheets **(3-iv),** and point **(9-ii)** is any point at the top, or the side, of a stack of pyrolytic graphitic sheets **(3-iv),** it is possible to estimate the temperature of the component **(1).** This allows simultaneous measurement and control of the temperature at the component level using the electrical resistance measurement. To trigger the thermo-electric device **(4)** an electrical signal is generated by a Proportional-Integral-Derivative (PID) controller **(8)** that activates a relay switch **(6i** and **6-ii)** that initiates the operation of the thermo-electric device **(4).** This relay switch is coupled to an external load **(5-i)** that is depicted as a resistance in **Figure 2a** and a power source **(7)** to allow also the generation of heat by the thermo-electric in cases where the temperature of the component **(1)** is below the desired set-point. In the case that heat is removed from the component **(1)** it is possible to couple the thermo-electric device as a thermo-electric generator. This allows for the generation of power that can be employed elsewhere in the system. The relay switch allows for fast control of the temperature regulation.

### 3) Individual Thermal-Router-Resistive Heating (I-TRRH):

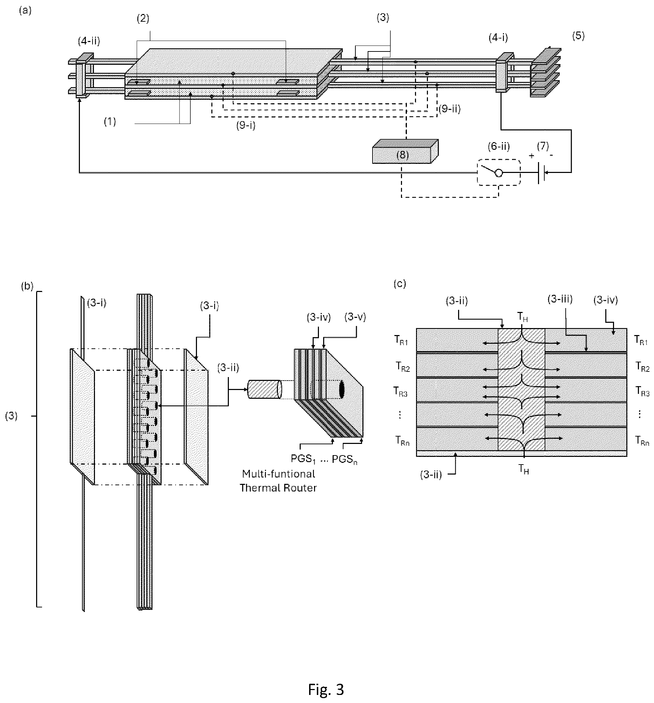

In this configuration, shown in **Figure 3****,** the thermal router can be employed to measure the temperature of the battery stack based on the change in the electrical resistance with temperature, while allowing heat dissipation to a heat sink or other heat dissipation system (ambient temperature or lower). To provide the heat to the battery or micro-electronic device a small current is passed through the thermal router, allowing fast heating of the system via Joule heating. To prevent electrical leakage from the thermal router to the surroundings the thermal router is covered by an electrical insulation layer of high thermal conductivity (e.g. aluminum nitride, boron nitride). Preferably, carbon or metallic pins are inserted perpendicular to the orientation of the graphite layers, allowing a maximum utilization of the thermal router capacity as it allows facile transfer of heat across the material.

As depicted in **Figure 3****,** in this configuration the thermal router can be employed to measure the temperature of the battery stack based on the change in the electrical resistance with temperature, route heat out of the component that needs to be thermally regulated using a heat sink and provide heat to the component using resistive heating by flowing a current through the pyrolytic sheet at a given electrical potential. The thermal router **(3)** is based on hierarchically arranged pyrolytic graphitic sheets **(3-iv)** with high thermal conductivity that are bonded by a polymeric adhesive **(3-iii)** and thermally coupled conductive pins **(3-ii)** that are perpendicular to the longitudinal direction of the pyrolytic graphitic sheets **(****Figure 3b****).** The thermal router is preferably covered by an electrical insulator **(3-i)** that prevents current leakage to the rest of the components. The thermal router **(3)** is preferably in direct contact, or at least in in thermal communication, with the component that needs to be thermally controlled **(1).** The bundle of thermal routers is electrically connected before and after said component **(1)** at points **(4-i** and **-ii),** which are coupled to the power source **(7),** switch **(6-ii),** and the Proportional-Integral-Derivative (PID) controller **(8).** The individual measurements of the resistance between points **9-i** and **9-ii** on the pyrolytic sheets right on the component **(1)** where point **(9-i)** is any point at the side of a stack of pyrolytic graphitic sheets **(3-iv),** and point **(9-ii)** is any point at the top, or the side, of a stack of pyrolytic graphitic sheets **(3-iv),** provides the temperature at the individual component level.

The thermal router **(3)** consists of pyrolytic graphitic sheets **(3-iv)** thermally conductive pins **(3-ii)** that are preferably in direct contact, or at least in thermal communication, with the component that needs to be temperature regulated **(1).** This allows conductive heat transfer by between the component **(1)** that is at a temperature ***T_{H}*** and the pyrolytic graphitic sheets **(3-iv)** that are at a temperature ***T_{R-n},*** where ***n*** is the number of the graphitic sheet. The direction and magnitude of the heat flux will depend on the temperature gradient between ***T_{H}*** and ***T_{R-n},*** the characteristics of the thermal router, and the potential heat losses to the environment. To minimize this heat losses a capping layer of thermal insulation **(3-i)** is preferably employed on the surfaces exposed to the environment. The thermal router **(3)** bundle is coupled to heat sinks **(4-i, 4-ii)** that allows heat dissipation. In the case of batteries, the electrical leads of the battery cell **(2)** are connected to the external load. The exact nature of the load will depend strongly on the final application of the **I-TRRH.**

The dynamic control of the temperature is done using the thermal routers as either heat conductive element coupled to the heat sinks **(4-i, 4-ii)** that remove the heat away from the component **(1)** or as Joule heaters by providing a current flow through the pyrolytic sheets. Here, the heat sink is located outside of the battery pack, substantially preventing thermalization of the system. By measuring the electrical resistance across the stack of pyrolytic graphitic sheets, i.e. between points **(9-i)** and **(9-ii)** where point **(9-i)** is any point at the side of a stack of pyrolytic graphitic sheets **(3-iv),** and point **(9-ii)** is any point at the top, or the side, of a stack of pyrolytic graphitic sheets **(3-iv),** it is possible to estimate the temperature of the individual components. This allows simultaneous measurement and control of the temperature at the component level using the electrical resistance measurement. To trigger the thermo-electric device an electrical signal is generated by a Proportional-Integral-Derivative (PID) controller **(8)** that activates a switch **(6-ii)** that initiates the operation of the system as heat sink.

The method of manufacturing the thermal router used in the present invention comprises the following steps:
a) Initial cleaning of the graphitic thermal conductive sheets using a solution of alcohol like ethanol or isopropanol, followed by plasma cleaning;
b) Spray-coating the sheets with a bonding solution containing preferably an adhesive and an alcohol in a preferred ratio 1:2, wherein the adhesive is preferably benzocyclobutene (BCB) or polyacrylate, and then contacting the sheets with each other;
c) Placing the resulting layered material in an oven at a temperature of between 100-180 ºC, preferably between 100-150 ºC, most preferably around 130 ºC during 2 to 12 hours, preferably 2 to 8 hours, most preferably around 6 hours, under vacuum. During this process, optionally a pressure of 1-5 Pa is applied on the material to ensure full removal of the bubbles in the bonding layer inside a vacuum oven at 0.1 bar.

### Example of a thermal router for the I-TRTE working mode:

In an embodiment of the thermal router for the I-TRTE working mode, the thermal router is based on hierarchically arranged pyrolytic graphitic sheets with high thermal conductivity that can vary from 700 to 1950 W/(m·K) with thicknesses that can vary from 50 to 100 microns. In the preferred configuration a thermal router of 2-30 layers of pyrolytic sheets with a thickness of 1-100 microns and a bonding layer is employed to route heat fluxes of about 1-500 W with a temperature gradient between the hot and cold regions of 1-100 K. The pyrolytic graphitic sheets are coupled together using a bonding agent that typically comprises benzocyclobutene (BCB) or polyacrylic acid binders in a layer of about 0.1-10 microns in thickness. The pyrolytic graphitic sheets are thermally coupled using conductive pins, as shown in **Figure 1** **(3-ii),** which are based on Cu, Al, or carbon. These pins are perpendicular to the longitudinal direction of the pyrolytic graphitic sheets increasing the contact area between the cross section of the pyrolytic graphitic sheets and the component (1). The pyrolytic graphitic sheets are based on a single sheet of material allowing the fabrication of geometries that optimal for the heat transfer. The thermal insulating layer is made of a heterostructure that could be based on transition metal dichalcogenide nano-layers of molybdenum disulfide (MoS₂), and tungsten disulfide (WS₂). Alternatively, coating of the surface with either silicon dioxide, or polymeric insulator is also feasible.

### Example of thermal router configuration for I-TRRH working mode:

In an embodiment of the thermal router for the I-TRRH working mode, the thermal router is based on hierarchically arranged pyrolytic graphitic sheets with high thermal conductivity that can vary from 700 to 1950 W/(m·K) with thicknesses that can vary from 50 to 100 microns. In the preferred configuration a thermal router of 2-30 layers of pyrolytic sheets with a thickness of 50-100 microns and bonding layer is employed to route heat fluxes of about 1-500 W with a temperature gradient between the hot and cold regions of 1-100 K. The pyrolytic graphitic sheets are coupled together using a bonding agent that is typically benzocyclobutene (BCB) or polyacrylic acid binders in a layer of about 0.1-10 microns in thickness. The pyrolytic graphitic sheets are based on a single sheet of material allowing the fabrication of geometries that are optimal for heat transfer. The thermal insulating layer is made of a heterostructure that can be based on transition metal dichalcogenide nano-layers of molybdenum disulfide (MoS₂), and tungsten disulfide (WS₂). Alternatively, coating of the surface with either silicon dioxide, or polymeric insulator is also feasible.

### Experimental tests:

### Experimental Test 1: Response of the thermal router to Joule heating:

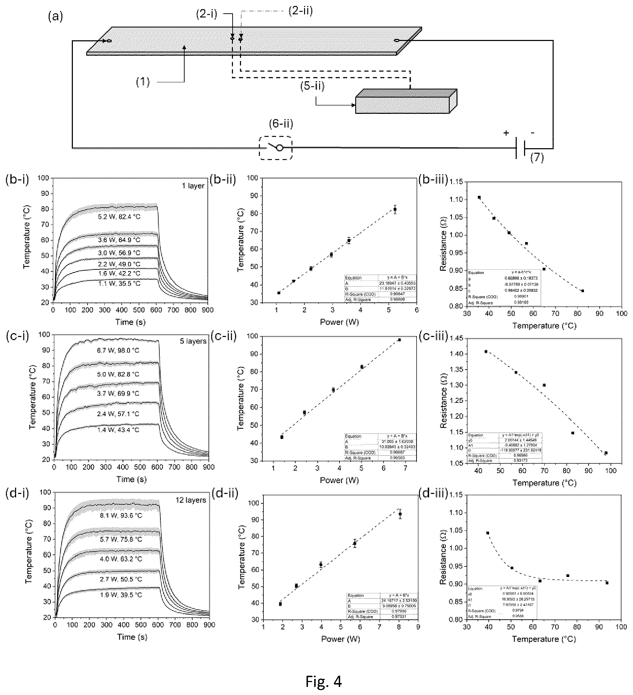

The response of the thermal routers to the Joule heating was monitored using a simple resistive-heating circuit the set-up shown in **Figure 4a****.** In this case, the thermal router **(1)** is electrically coupled to the power source **(7)** that is connected to the switch **(6-i),** while the temperature of the surface of the thermal router is measured using the thermo-couples located at the top and bottom of the thermal router **(2-i, 2-ii).** The temperature and the observed voltage obtained for a given current flux are recorded using the data acquisition unit **(5-ii).**

The dynamic response of thermal router to applied power was nearly instantaneous (see **Figure 4b, c, and d****).** Here, the rate of temperature increase was proportional to the applied power, which allows accurate control of the heat flux during operation. In the case of one-layer thermal router **(****Figure 4b-i****)** the application of 5.2 W was sufficient to induce a temperature increase from 25 to 82.4 °C. This temperature increase was similar for the thermal routers comprising of five and twelve layers of pyrolytic graphitic sheets **(****Figure 4 c-i and d-i****)** respectively. Removing the power load from the thermal router led to a fast decrease in the temperature, which is possible thanks to the high thermal conductivity of the thermal router. The cooling mechanism in this case is primarily convective heat transfer to the surrounding environment (air at 20 °C). Using the data at the steady state conditions in **Figure 4b-i, c-i, and d-i** one can generate a power-temperature relationship curve. As shown in **Figure 4b-ii, c-ii, and d-ii****,** the temperature linearly increased with the applied power regardless of the number of pyrolytic graphitic layers. By measuring the resistance across the stack of pyrolytic graphitic sheets, it is possible to estimate the temperature-resistance relationship (see **Figure 4b-iii, c-iii, and d-iii****).** The results indicate that for all the thermal routers the electrical resistance decreased as the temperature increased. The exact decay rate in the resistance with temperature varied substantially with the number of layers in the thermal router. In the case of one-layer material, the resistance decreased in a power-law as the temperature increased from 35-85 °C (Figure **4b-iii****).** In the case of the five-layers thermal router the temperature seemed to decrease more strongly, and an exponential decrease was observed already in the low temperature range of 45-85 °C (Figure **4b-iii****)** with values of 1.4 to 1.15 Ω, respectively. For the twelve-layer thermal router the resistance reached a plateau in electrical resistance at around 65 °C. This result suggests that there is a maximum range of operating temperatures in which the temperature can be measured using the resistance of the thermal router as the number of layers increases. Since the operating temperature of the components that needs to be thermally regulated is usually below 60 °C, it is possible to utilize the thermal routers as heaters and temperature sensors.

### Experimental Test 2: Thermal conductivity of the thermal router:

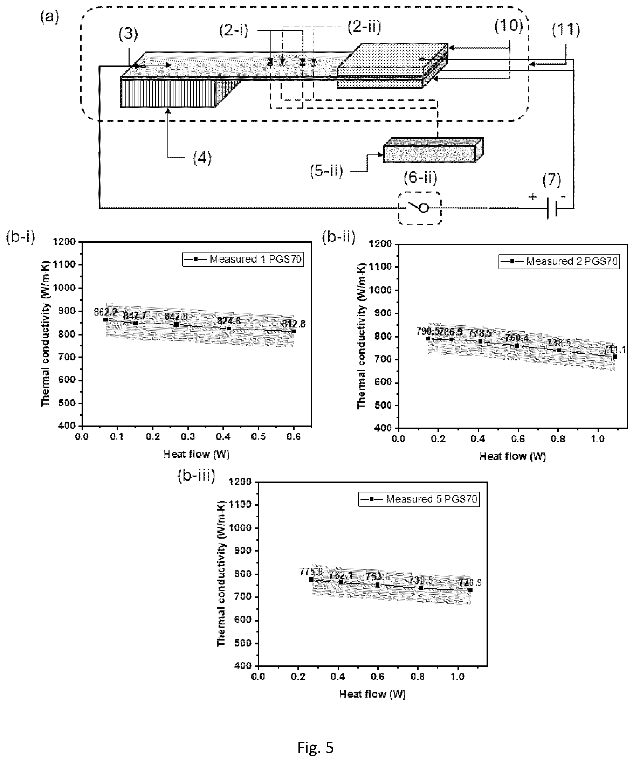

The thermal conductivity of the thermal routers as a function of heat flow was monitored using a two-thermocouple heat conductivity set-up (see **Figure 5a****).** In this case, the thermal router **(3)** is thermally coupled to two resistive-heaters **(10)** that are powered by the power source **(7).** This is connected to the switch **(6-ii),** which opens and closes the current flow to the heaters **(10).** The temperature of the thermal router is monitored using two pairs of thermocouples located at the top **(2-i)** and bottom **(2-ii)** sides of the specimen. The distance between the two thermocouples located on the same face of the material is fixed over the experimentation, allowing the determination of the temperature gradient along the thermal router using the data acquisition unit **(5-ii).** The heat supplied at the right-hand side of the **Figure 4a** thermal router is channeled to the heat sink **(4)** on the right. To reduce the heat losses via convection the system is placed inside a vacuum chamber **(11).** By combining this information with the power readouts obtained from the dual heating system **(10)** it is possible to determine thermal conductivity as a function of the heat flux through the material **(****Figure 5 b-i, ii,** iii, **and iv).**

In the case of the one-layer thermal router the thermal conductivity of the material at 0.8 and 0.6 W was around 862 and 812 W/(m K), respectively. Notably, when using thermal routers of two and five layers the thermal conductivity at low powers decreased to 790 and 776 W/(m K). The increase in the power supplied to the system slightly decreased the effective thermal conductivity of the material. The high thermal conductivity of these mater would allow fast heat transfer in and out the thermally regulated component.

As it has been shown, the system of the invention can measure temperature of the system and deliver cooling or heating power to the electrical device to be thermally controlled such as a battery or an electronic device in a self-regulative manner, which allows heat recovery back into electricity when using the thermo-electric option. This increases the lifetime of the heat-evolving electrical device (e.g. battery or micro-electronic), increases energy efficiency, and prevents the risk of dislocation of the temperature measurement probes.

The solution herein provided offers several unique features that are unprecedented in the field, including: (1) the possibility to measure the temperature of each individual cell inside a battery stack, (2) the possibility of delivering cooling or heating power using either thermo-electric or Joule heating devices to individual cells, (3) the recovery of energy thanks to the conversion of waste heat to electricity in the thermoelectric component, and (4) the system can work in a self-regulated, standalone, robust, and compact mode of operation thanks to the simultaneous temperature measurement and heat transport.

The system can be easily standardized using conventional manufacturing techniques based on laser machining and power control systems.

## Claims

1. A thermal management system for regulating the temperature of an electrical device (1), wherein the system includes at least one thermal router (3) comprising at least one stack of pyrolytic graphitic sheets (3-iv) bound together, the stack being in thermal communication with the electrical device (1), wherein the system is configured to determine the temperature of the electrical device (1) by measuring the change in the electrical conductivity across the stack of pyrolytic graphitic sheets (3-iv) when the stack is in thermal communication with the electrical device (1), and wherein the system is configured to drive heat in or out of the electrical device (1) depending on the temperature of the electrical device (1) through the stack of pyrolytic graphitic sheets (3-iv).

2. The thermal management system according to claim 1, wherein the stack of pyrolytic graphitic sheets (3-iv) additionally comprises a plurality of heat conductive pins (3-ii) that run perpendicular to the planar direction of the pyrolytic graphitic sheets (3-iv) and that go through the stack of pyrolytic graphitic sheets (3-iv) completely.

3. The thermal management system according to claims 1 or 2, wherein the stack comprises between 1 and 30 pyrolytic graphitic sheets (3-iv).

4. The thermal management system according to any one of claims 1 to 3, wherein each pyrolytic graphitic sheet (3-iv) has a thickness of between 10 and 150 microns.

5. The thermal management system according to any one of claims 1 to 4, wherein the pyrolytic graphitic sheets (3-iv) are bonded together using a layer of polymer adhesive (3-iii) of 0.1 to 10 microns thickness.

6. The thermal management system according to claim 5, wherein the polymer adhesive comprises benzocyclobutene or polyacrylic acid.

7. The thermal management system according to any one of claims 1 to 6, wherein the surface of one or more of the pyrolytic graphitic sheets (3-iv) is treated with oxygen plasma to increase their adherence to the polymer adhesive (3-iii).

8. The thermal management system according to any one of claims 1 to 7, wherein the thermal router (3) is covered by an insulator layer (3-i) that prevents current leakage to the rest of components.

9. The thermal management system according to claim 8, wherein the insulator layer (3-i) is made of a heterostructure based on transition metal dichalcogenide nano-layers of molybdenum disulfide (MoS2) or tungsten disulfide (WS2), silicon dioxide, or polymeric materials.

10. The thermal management system according to any one of claims 1 to 9, further comprising at least one thermoelectric component (4) located sufficiently far removed from the electrical device (1) to substantially prevent thermalization of the thermo-electric component (4) and the device (1).

11. The thermal management system according to any one of claims 1 to 10, further comprising at least one of an external load (5-i), a data acquisition unit (5-ii), a relay switch (6-i, 6-ii), a power source (7), a Proportional-Integral-Derivative (PID) controller (8), and at least one heater (10).

12. The thermal management system according to any one of claims 1 to 11, wherein the pyrolytic graphitic sheets are hierarchically arranged.

13. The thermal management system according to any one of claims 1 to 12, wherein the electrical device (1) to be thermally controlled is a battery, an electronic component or a micro-electronic component.

14. A method for the thermal management of an electrical device (1), the method comprising the steps of:
a) placing a thermal router (3) comprising at least one stack of pyrolytic graphitic sheets (3-iv) bound together in thermal communication with the electrical device (1);
b) determining the temperature of the electrical device (1) by measuring the change in the electrical conductivity across the stack of pyrolytic graphitic sheets (3-iv) when the stack is in thermal communication with the electrical device (1), and
c) depending on the temperature of the electrical device (1), driving heat in or out of the electrical device (1) through the stack of pyrolytic graphitic sheets (3-iv).

15. The method for the thermal management of an electrical device (1) according to claim 14, wherein the electrical conductivity across the stack of pyrolytic graphitic sheets is measured between a point (9-i) at the side of a stack of pyrolytic graphitic sheets, and a point (9-ii) at the top, or the side, of a stack of pyrolytic graphitic sheets (3-iv).
